# EUROPÄISCHE PATENTSCHRIFT

(11) **EP 0 945 716 B1**
(45) Veröffentlichungstag und Bekanntmachung des Hinweises auf die Patenterteilung: **19.04.2000**
(21) Anmeldenummer: 99102621.2
(22) Anmeldetag: 11.02.1999
(51) Int. Cl.: G01G 19/393

(54) **Kombinationswaage**
Combinatorial weighing apparatus
Dispositif de pesage combinatoire

(30) Priorität: 18.03.1998 DE 19811837
(43) Veröffentlichungstag der Anmeldung: 29.09.1999
(73) Patentinhaber: MULTIPOND WÄGETECHNIK GMBH, 84478 Waldkraiburg (DE)
(72) Erfinder: Zeyer, Bernd, 84549 Engelsberg (DE); Pain, Tony, Beaconsfield, Buckinghamshire HP91SQ (GB)
(74) Vertreter: Prüfer, Lutz H., Dipl.-Phys.

(56) Entgegenhaltungen:
- EP-A- 0 725 263
- PATENT ABSTRACTS OF JAPAN vol. 096, no. 003, 29. März 1996 & JP 07 301556 A (YAMATO SCALE CO LTD), 14. November 1995

## Beschreibung

Die Erfindung betrifft eine Kombinationswaage nach dem Oberbegriff des Patentanspruches 1.

Eine solche Kombinationswaage ist aus der DE 23 40 832 C bekannt. Bei solchen Kombinationswaagen werden in den einzelnen Wägebehältern Teilmengen erzeugt, die durch Auswahl einer Unterkombination aus der Gesamtanzahl von Wägeköpfen zu einer Gesamtmenge zusammengefaßt und einer Packung zugeführt werden. Eine solche Kombinationswaage hat eine Mehrzahl von Wägezellen und zugehörigen Wägebehältern, vorzugsweise 10 bzw. 14, aus denen dann die Unterkombinationen ausgewählt werden. Der Vorteil dieses Waagentyps besteht darin, daß auch bei Produkten mit schwankenden Stückgewichten gleichmäßige Gesamtgewichte erzielbar sind und trotzdem relativ hohe Wägegeschwindigkeiten mit etwa 70 Wägungen pro Minute bei einer Waage mit 10 Wägeköpfen erzielbar sind. Ferner sind klassische selbsttätige Waagen zum Abwägen bekannt, die jeweils ein Produkt wiegen und in eine Packung abgeben. Zum Erhöhen der Wägegeschwindigkeit werden mehrere solche unabhängig voneinander arbeitende Waagen nebeneinander angeordnet. Um die Wägegeschwindigkeit einer 10-Kopf-Kombinationswaage zu erreichen, sind drei solche klassischen selbsttätigen Waagen nötig. Da hier jede Waage einzeln ihr Produkt abgibt, ist pro Waage eine höhere Geschwindigkeit möglich als bei den Kombinationswaagen. Allerdings ist die Gleichmäßigkeit der abgegebenen Gewichte geringer. Es werden deshalb die beiden Waagetypen nebeneinander verwendet.

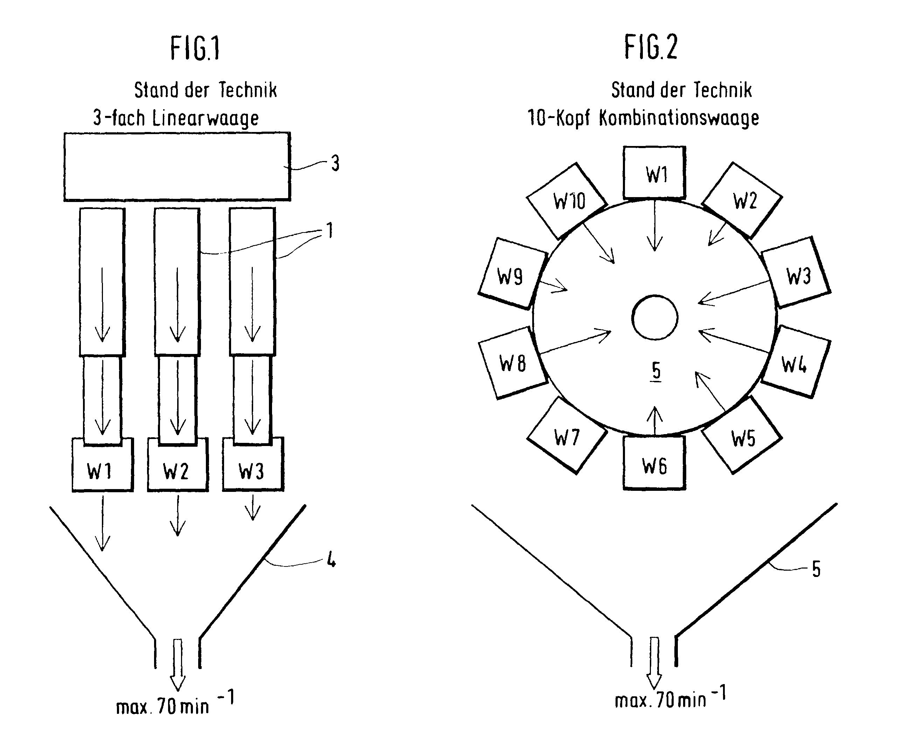

In Fig. 1 ist eine Linearwaage beschrieben, die drei nebeneinander angeordnete Produktzuführeinrichtungen 1 und an deren Ausgang jeweils zugehörige Wägebehälter W₁ bis W₃ und eine gemeinsame Steuerung 3 aufweist. Auf der Ausgangsseite der Wägebehälter ist eine trichterförmige Rutsche 4 vorgesehen, über die die Wägebehälter einer nach dem anderen das gewogene Produkt in eine unter der Rutsche anzuordnende Verpackung abgeben.

In Fig. 2 ist im oberen Teil eine Draufsicht auf eine Kombinationswaage gezeigt mit Wägebehältern W₁ bis W₁₀, die ausgangsseitig mit der darunter angedeuteten trichterförmigen Rutsche 5 zusammenwirken. Die Ausgänge der Wägebehälter W₁ bis W₁₀ sind so über eine nicht gezeigte Steuerung angesteuert, daß jeweils eine Unterkombination aus drei der zehn Wägebehälter, die in der Figur durch gleichlange Pfeile angedeutet sind, zum Erzeugen einer Gesamtmenge gemeinsam geöffnet werden. In dem gezeigten Ausführungsbeispiel werden also Kombinationen der Wägebehälter W₃, W₄, W₈; W₁, W₅, W₁₀; W₂, W₆, W₉ in drei aufeinanderfolgenden Abgabezyklen gebildet.

Aufgabe der Erfindung ist es, die Wägegeschwindigkeit in Abhängigkeit von dem gewünschten Wiegeergebnis zu beschleunigen.

Diese Aufgabe wird durch die in Patentanspruch 1 gekennzeichnete Kombinationswaage gelöst.

Weitere Merkmale und Zweckmäßigkeiten der Erfindung ergeben sich aus der Beschreibung eines Ausführungsbeispieles anhand der Figuren. Von den Figuren zeigen:
Fig. 1 eine schematische Darstellung einer bekannten Linearwaage;
Fig. 2 eine schematische Darstellung einer Kombinationswaage; und
Fig. 3 eine schematische Darstellung der erfindungsgemäßen Kombinationswaage.

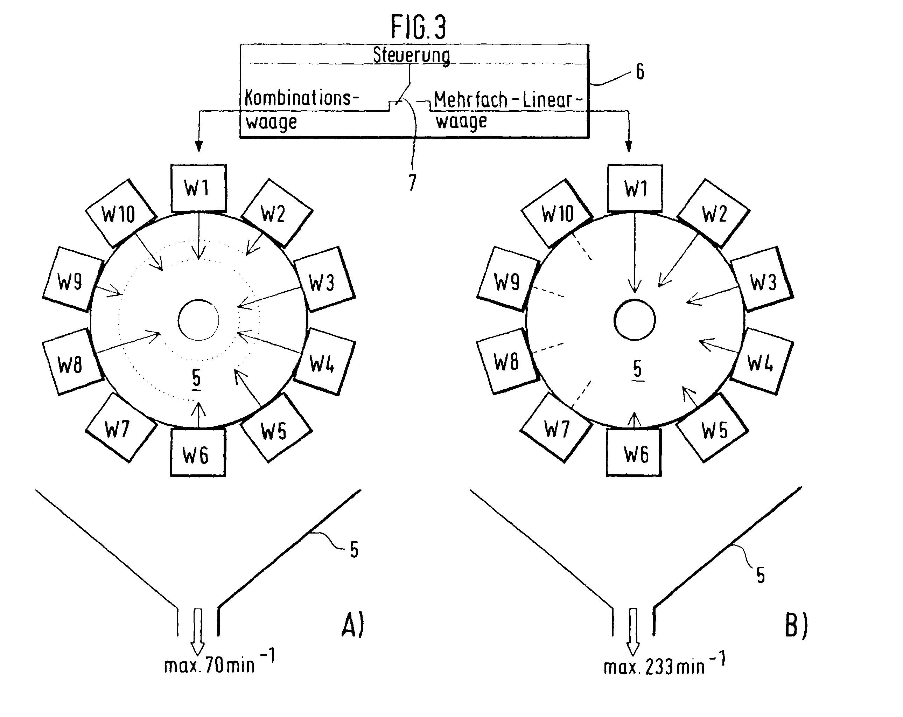

In Figur 3 ist die erfindungsgemäße Kombinationswaage in zwei Betriebsweisen dargestellt. Die Kombinationswaage weist Wägebehälter W₁ bis W₁₀ auf. Jedem Wägebehälter ist eine nicht gezeigte Wägezelle zugeordnet, deren Ausgangssignal einer Steuerung 6 zugeführt wird. Die Steuerung 6 ihrerseits ist ausgangsseitig mit jeweiligen Antrieben von Ausgangsklappen der Wägebehälter W₁ bis W₁₀ verbunden. Die Ausgänge sind zu einer gemeinsamen trichterförmigen Rutsche 5 gerichtet, unter der im Betrieb die zu befüllenden Packungen angeordnet werden.

Im Betrieb arbeitet die Steuerung in der bereits anhand der Figur 3 beschriebenen bekannten Weise. Es werden also jeweils Unterkombinationen von Teilgewichten zum Bilden eines Gesamtgewichtes ausgewählt. In dem in a) gezeigten Ausführungsbeispiel bilden die Mengen der Wägebehälter W₃, W₄, W₈; W₁, W₅, W₁₀; W₂, W₆, W₉ jeweilige Unterkombinationen zum Bilden eines Gesamtgewichtes.

Die Steuerung 6 ist so ausgebildet, daß sie aus dem oben beschriebenen Kombinationswaagenmodus über einen Umschalter 7 in einen Linearwaagenmodus umschaltbar ist. Der Linearwaagenmodus ist so ausgebildet, daß die Steuerung die Antriebe für die Ausgangsklappen der Wägebehälter in der in b) von Fig. 3 durch die Pfeile angedeuteten Weise die Ausgänge der einzelnen Wägebehälter unabhängig voneinander einen nach dem anderen zum Abgeben einer abgewogenen Menge Produkt in die Rutsche 5 öffnet. In dem gezeigten Beispiel werden also die Ausgänge der Wägebehälter W₁, W₂, W₃ ... W₁₀ nacheinander geöffnet, so daß die einzelnen Wägebehälter mit den zugehörigen Wägezellen in linearer Weise unabhängig von einander nebeneinander betätigt werden und die Waage wie eine Vielzahl von zehn Linearwaagen wirkt.

Auf diese Weise wird erreicht, daß mit der Kombinationswaage einerseits mit hoher Geschwindigkeit sehr genaue Produktmengen auch dann erzielbar sind, wenn die Stücke größere Schwankungen aufweisen und/oder größere Schwankungen der abgegebenen Portionsgewichte in Kauf genommen werden können, andererseits aber eine einfache Umschaltung derart möglich ist, daß dann die Wägegeschwindigkeit gewaltig erhöht werden kann, wenn die Stückgewichte ausreichend ähnlich sind.

## Patentansprüche

1. Kombinationswaage mit einer Mehrzahl von Wägezellen und diesen jeweils zugeordneten Wägebehältern (W₁ ... W₁₀) mit jeweils einem verschließbaren Ausgang und einer ausgangsseitigen Übergabeeinrichtung (5) zum Abgeben gewogener Produkte in darunter anzuordnende Packungen, und einer Steuerung (6), die eingangsseitig mit den jeweiligen Ausgängen der Wägezellen und ausgangsseitig mit jeweiligen Antrieben für die Verschließbaren Ausgänge verbunden ist, und die diese Antriebe der Ausgänge so steuert, daß jeweils eine Unterkombination mehrerer Wägebehälter zum Bilden einer in eine Verpackung abzugebenden Gesamtmenge ausgewählt wird, dadurch gekennzeichnet, daß die Steuerung (6) in eine zweite Betriebsart umschaltbar ist, in der sie die Antriebe der Ausgänge so ansteuert, daß jeder Wägebehälter unabhängig von den anderen ausgewählt wird.

2. Kombinationswaage nach Anspruch 1, dadurch gekennzeichnet, daß die Antriebe der Ausgänge der Wägebehälter in der Reihenfolge der Anordnung der Wägebehälter angesteuert werden.

## Claims

1. Combination weighing apparatus having a plurality of weighing cells and, assigned to each of these, weighing receptacles (W₁ ... W₁₀) with one closable outlet each and an outlet-side transfer device (5) for discharging weighed products into packages to be arranged therebeneath, and a controller (6) which is connected, on the input side, to the respective outputs of the weighing cells and, on the output side, to the respective drives for the closable outlets, and which controls these drives of the outlets in such a way that in each case a subcombination of a plurality of weighing receptacles is selected to form a total quantity to be discharged into a package, characterized in that the controller (6) can be changed over into a second mode of operation in which it controls the drives of the outlets in such a way that each weighing receptacle is selected independently of the others.

2. Combination weighing apparatus according to Claim 1, characterized in that the drives of the outlets of the weighing receptacles are controlled in the order in which the weighing receptacles are arranged.

## Revendications

1. Dispositif de pesage combinatoire comportant une pluralité de cellules de pesage et des récipients de pesage (W₁ à W₁₀) associés à celles-ci et pourvus chacun d'une sortie refermable et un dispositif de dépose (5) du côté de la sortie pour déposer les produits pesés dans des emballages se trouvant en-dessous, et une commande (6) qui est reliée du côté de l'entrée aux sorties des différentes cellules de pesage et du côté de la sortie aux différents entraînements des sorties refermables, et qui commande ces entraînements de sortie de façon à sélectionner une sous-combinaison de plusieurs récipients de pesage pour former une quantité totale à déposer dans un emballage, caractérisé en ce que la commande (6) peut être commutée dans un deuxième mode de fonctionnement dans lequel les entraînements des sorties sont commandés de telle sorte que chaque récipient de pesage est sélectionné indépendamment des autres.

2. Dispositif de pesage combinatoire selon la revendication 1, caractérisé en ce que les entraînements des sorties des récipients de pesage sont commandés dans l'ordre de disposition des récipients de pesage.
